(19) Europäisches Patentamt
European Patent Office
Office européen des brevets

(11) Numéro de publication : **0 149 368**
**B1**

(12) **FASCICULE DE BREVET EUROPÉEN**

(45) Date de publication du fascicule du brevet :
15.06.88

(51) Int. Cl.⁴ : **A 01 F 15/00**

(21) Numéro de dépôt : **84400111.5**

(22) Date de dépôt : **19.01.84**

(54) **Presse à balles cylindriques.**

(43) Date de publication de la demande :
**24.07.85 Bulletin 85/30**

(45) Mention de la délivrance du brevet :
**15.06.88 Bulletin 88/24**

(84) Etats contractants désignés :
**DE FR GB IT NL**

(56) Documents cités :
**EP-A- 0 064 117
EP-A- 0 148 519
DE-A- 2 634 638
DE-A- 2 848 777
FR-A- 2 368 214**

(73) Titulaire : **JOHN DEERE (Société Anonyme)
20, Rue André Dessaux
F-45401 Fleury-les-Aubrais (FR)**

(72) Inventeur : **Gerhardt, Ralph August
1120 14th Street
Bettendorf Iowa (US)**
Inventeur : **Viaud, Jean
16 rue de l'Ecole
F-57200 Sarreguemines (FR)**

(74) Mandataire : **Pruvost, Marc Henri et al
Cabinet ORES 6, Avenue de Messine
F-75008 Paris (FR)**

EP 0 149 368 B1

**Description** (pour les Etats contractants : DE, FR, GB)

La présente invention se rapporte d'une façon générale aux presses à balles cylindriques ou rondes du type comportant des jeux de bandes ou courroies qui, par leur déplacement, forment par enroulement à l'intérieur d'une chambre ménagée dans le corps de la presse une balle de forme générale cylindrique de grand diamètre à partir de produits de récolte, notamment de fourrage ou de foin ramassés sur le champ par un ramasseur au cours de la progression de la presse et amenés en nappe à la chambre de formation de la balle. Lorsque la balle ainsi formée a atteint le diamètre requis, elle est soumise à une opération de liage, puis éjectée ou déchargée généralement par un système de porte prévu à l'arrière de la presse.

On comprend que les opérations de liage et de déchargement des balles formées dans la chambre de la presse exigent un certain laps de temps, pendant lequel la presse est à l'arrêt, ce qui réduit en conséquence le rendement d'une machine de ce type.

Un inconvénient des presses à balles cylindriques, dont les avantages par rapport aux presses à balles rectangulaires sont bien connus, réside justement dans cette réduction de rendement ou de capacité qui résulte des temps d'arrêt nécessaires au liage et au déchargement.

Or la tendance actuelle dans le machinisme agricole est d'augmenter autant que possible la capacité ou le rendement des machines ou appareils utilisés dans une exploitation.

Dans une réalisation, décrite dans EP-A-0 148 519, la presse comprend deux chambres placées l'une derrière l'autre sur son châssis, définies par un seul système de bandes ou courroies avec lequel coopère un rouleau de renvoi déplaçable pour ouvrir et/ou fermer un passage de transfert entre les deux dites chambres. Dans ce document, qui bénéficie d'une date de priorité antérieure à la présente Demande mais qui a été publié à une date postérieure et qui fait donc partie de l'état de la technique au sens de l'article 54(3) et (4) de la CBE, le transfert entre les deux dites chambres est quelque peu mal commode, puisqu'il nécessite l'arrêt d'un transporteur que comprend la presse ou même un changement de direction du sens de circulation de ce transporteur.

L'invention consiste à réaliser une machine nouvelle, en permettant la réalisation d'une presse à balles cylindriques ou rondes capable de former, pendant le liage et le déchargement d'une balle, un noyau de balle-dense à partir des produits de récolte ramassés, sans augmenter de façon inacceptable les dimensions de la presse ou son poids et qui, en outre, soit de fonctionnement simple et sûr.

On parvient à ce résultat suivant l'invention, dans le cas d'une presse à balles cylindriques ou rondes conforme à EP-A-0 148 519 du type dans lequel les produits de récolte, amenés en nappe à la chambre de formation principale d'une balle au moyen d'au moins un ramasseur ou dispositif équivalent, subissent à l'intérieur de cette chambre un enroulement sous l'effet de bandes ou courroies entraînées de façon positive, pour former par enroulement sur elle-même de cette nappe de produits de récolte une balle cylindrique ou ronde qui est liée puis déchargée quand elle a atteint le diamètre désiré, les bandes ou courroies délimitant en partie la chambre principale de formation de la balle délimitant également au moins de façon partielle une chambre primaire de réception des produits de récolte où lesdits produits sont enroulés et compressés sous l'effet desdites bandes ou courroies pour former un noyau de balle, un rouleau de renvoi des bandes ou courroies, — déplaçable entre une position inférieure dans laquelle ces bandes ou courroies s'étendent entre les deux chambres et une position supérieure dans laquelle un passage est ménagé entre lesdites chambres —, étant prévu pour ouvrir et/ou fermer ledit passage pour le transfert du noyau de balle de la chambre primaire vers la chambre principale, après le déchargement d'une balle à partir de cette dernière. Selon l'invention, au moins un ramasseur et, le cas échéant, un transporteur à bande est prévu pour diriger sélectivement les produits de récolte depuis le sol vers cette chambre principale ou vers cette chambre primaire.

Suivant un mode de réalisation paraissant avantageux, les bandes ou courroies d'enroulement de formation de la balle sont disposées selon un trajet défini par des rouleaux de renvoi tel qu'elles délimitent simplement la partie de la chambre primaire qui est adjacente à la chambre principale, un jeu de bandes ou courroies additionnelles étant prévu qui passent sur des rouleaux de renvoi et délimitent la partie restante de la chambre primaire.

Suivant un agencement possible, il est prévu sur la presse deux ramasseurs ou dispositifs analogues, dont l'un est monté de manière à diriger les produits de récolte ramassés sur le sol vers la chambre primaire, tandis que l'autre est monté de manière à diriger ces produits de récolte vers la chambre principale, au moins le ramasseur associé à la chambre primaire, ou ramasseur avant, étant monté de façon déplaçable afin de pouvoir être relevé pendant la formation normale d'une balle dans la chambre principale.

Suivant une variante de réalisation, il est prévu sur la presse un ramasseur unique associé à une bande transporteuse inférieure, ces éléments étant déplaçables entre une position dans laquelle le ramasseur dirige les produits de récolte vers la chambre primaire, et une autre position dans laquelle ces produits de récolte sont dirigés par ce ramasseur sur la bande transporteuse pour leur transfert à la chambre principale.

Suivant une autre variante encore, on peut prévoir un ramasseur unique disposé sensiblement entre les chambres primaire et principale et
dirigeant normalement les produits de récolte
ramassés vers la chambre principale, en combinaison avec des moyens déviant ces produits de
récolte vers la chambre primaire pendant le liage
d'une balle dans la chambre principale et son
déchargement à partir de celle-ci. Ces moyens
peuvent être constitués par un dispositif déflecteur, ou bien directement par le rouleau de renvoi
intermédiaire déplaçable, qui peut venir occuper
alors une autre position basse provoquant cette
déviation des produits de récolte vers la chambre
primaire de la presse.

Dans chaque cas, la fermeture de la porte
commande le relevage du rouleau de renvoi
intermédiaire, ce qui établit un passage entre la
chambre primaire et la chambre principale, et des
moyens sont prévus pour assurer le transfert du
noyau de balle formé dans cette chambre primaire
jusque dans cette chambre principale. Ces
moyens peuvent être constitués simplement par
les organes élastiques agissant sur des rouleaux
de renvoi des bandes ou courroies de chambre
primaire, qui tendent à repousser le noyau de
balle vers la chambre principale quand il n'est
plus retenu par le brin de bandes passant sur le
rouleau de renvoi intermédiaire déplaçable. Ce
transfert peut également être assuré ou au moins
facilité par la bande transporteuse éventuellement
prévue vers la partie inférieure de la chambre
primaire.

La description qui va suivre, faite en regard des
dessins annexés, donnés à titre non limitatif,
permettra de mieux comprendre l'invention.

La figure 1 est une vue schématique de profil
d'une presse à balles cylindriques ou rondes
agencée suivant l'invention.

La figure 2 est une vue analogue correspondant
à une variante.

La figure 3 est une vue analogue correspondant
à une autre variante encore.

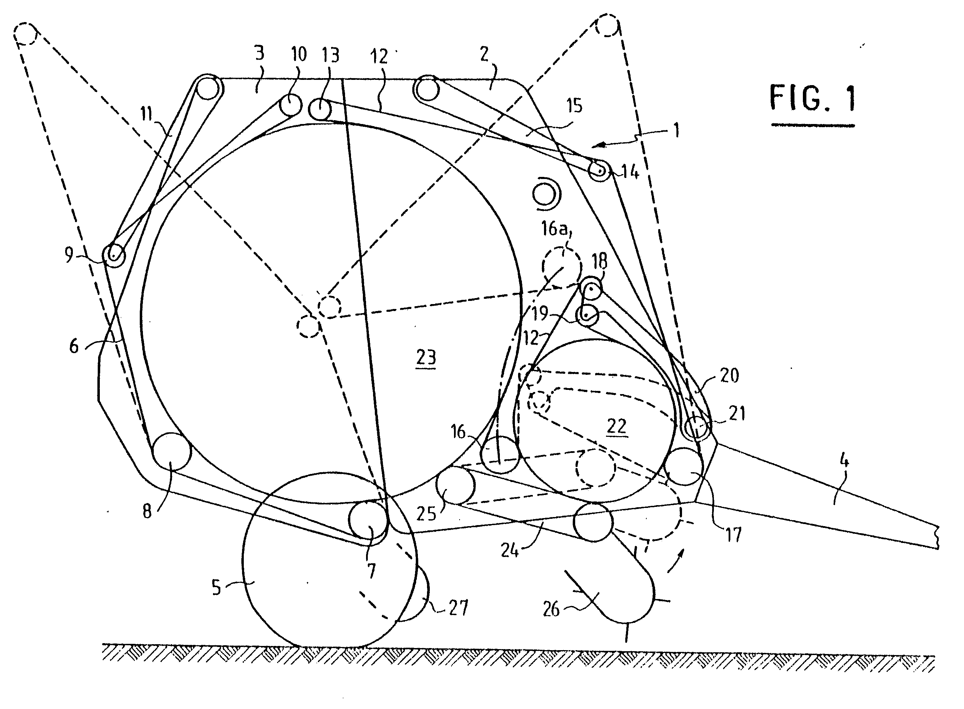

Sur la figure 1, on a désigné par la référence 1
une presse à balles cylindriques ou rondes de
grand diamètre dont le châssis et le corps n'ont
pas été représentés en détail. Ce corps comprend
une partie fixe avant 2 et une porte relevable
arrière 3. Le châssis est équipé d'une flèche
d'attelage 4 permettant d'atteler la presse à un
tracteur. Il est supporté par une paire de roues 5.

La presse comporte un premier jeu de bandes
ou courroies 6 passant sur des rouleaux de renvoi
fixes 7 et 8 et sur des rouleaux de renvoi mobiles
9 et 10, les bras de support du rouleau mobile 9
ayant été indiqués en 11. Les ressorts de sollicitation des bras mettant les bandes en tension, en
soi classiques, n'ont pas été représentés. On a
indiqué en pointillé la position des bandes ou
courroies 6 au début de la formation d'une balle
et en traits pleins la position de ces bandes ou
courroies 6 quand la balle a atteint son diamètre
maximum.

La presse comprend également, d'une manière
en soi classique, un second jeu de bandes ou
courroies 12. On a indiqué en 13 et 14 deux rouleaux de renvoi mobiles de ces bandes ou
courroies, le rouleau 14 étant porté par des bras
15. Ici encore, les organes élastiques de sollicitation des bras de tension des bandes ou courroies
n'ont pas été représentés.

Suivant l'invention, il est prévu en combinaison
avec les bandes ou courroies 12 un rouleau de
renvoi mobile 16, déplaçable dans une direction
sensiblement verticale. Ce rouleau a été illustré
en traits pleins en 16 dans une position de travail
de la presse et en pointillé en 16a dans une
position de transfert qui sera décrite plus loin.

Dans le cas de l'agencement représenté, les
bandes ou courroies 12 passent également sur un
rouleau fixe 17 prévu à la partie avant de la
presse, ainsi que sur deux rouleaux 18, 19 portés
par un bras 20 monté à pivotement en 21 également vers la partie avant de la presse.

On voit sur la Fig. 1, que, dans la condition des
bandes ou courroies 6 et 12 représentée en traits
pleins, dans laquelle le rouleau 16 occupe sa
position inférieure, les brins de bandes voisins de
ce rouleau divisent la presse en deux chambres, à
savoir une chambre avant ou primaire 22 et une
chambre arrière ou principale 23.

La chambre 22 est délimitée sur sa presque
totalité par les bandes ou courroies 12, du fait de
leur passage autour du rouleau 16 en position
inférieure, sur les rouleaux 18 et 19 et sur le
rouleau 17. Cette chambre 22 est complétée, dans
la condition de travail représentée en traits pleins,
par un court transporteur à bande inférieur 24
pouvant pivoter autour de l'axe de son rouleau de
renvoi arrière 25 et portant un ramasseur indiqué
schématiquement en 26. Un autre ramasseur 27
est représenté schématiquement en arrière du
précédent, juste en avant des roues 5.

La position de la presse représentée en traits
pleins sur la Fig. 1 correspond à la condition
obtenue à la fin de l'opération de liage, au
moment du déchargement d'une balle liée à partir
de la chambre principale 23 de la presse. Le
ramasseur 26 se trouve alors en position basse,
de sorte que pendant la progression de la presse
à travers le champ durant l'opération de liage, les
produits de récolte ramassés par le ramasseur 26
sont dirigés vers la chambre primaire 22, dans
laquelle il se forme, par enroulement, un noyau
de balle comme indiqué, entre les parties conjuguées des bandes 12 et le transporteur inférieur
24. La condition illustrée en traits pleins correspond à un diamètre en principe maximum du
noyau de balle ainsi formé dans la chambre
primaire 22.

En conséquence, pendant les opérations de
liage et de déchargement d'une balle formée
dans la chambre principale 23, la presse peut
continuer sa progression à travers le champ, les
produits ramassés formant dans la chambre primaire 22 un noyau de balle dense ou serré par
enroulement entre les brins de bandes 12, du fait
de la tension exercée par les ressorts en soi
usuels agissant sur les bras 20 portant les rouleaux mobiles 18, 19 de la presse.

Lorsque l'opération de déchargement est terminée et quand la porte 3 de la presse est refermée, le rouleau de renvoi 16 est déplacé vers le haut jusqu'à la position 16a, les bandes ou courroies occupant alors les positions indiquées en pointillé. Ce relevage du rouleau 16 jusqu'à la position 16a établit ainsi un passage entre la chambre primaire 22 et la chambre principale 23 de la presse, de sorte que le noyau de balle formé dans la chambre primaire 22 peut être transféré de celle-ci dans la chambre principale. Ce transfert est assuré par le fait que ce noyau de balle n'est plus retenu à sa partie arrière par les bandes ou courroies 12 passant sur le rouleau 16. Après ce transfert, la courte bande transporteuse 24 est relevée avec le ramasseur 26 par pivotement autour de l'axe 25 de son rouleau de renvoi arrière, pour venir occuper la position indiquée en pointillé, et le bras 20 bascule vers le bas autour de l'axe 21 pour venir également occuper la position indiquée en pointillé.

Après le transfert du noyau de balle de la chambre primaire 22 dans la chambre principale 23, le rouleau de renvoi 16 est à nouveau abaissé pour revenir de la position 16a à la position inférieure représentée en traits pleins, ce qui limite à nouveau la chambre principale à sa partie avant.

Etant donné que le ramasseur 26 est relevé, il ne ramasse plus les produits de récolte reposant sur le sol en andain, et ces produits de récolte sont repris par le ramasseur 27 et transférés alors directement à la chambre principale 23, dans laquelle lesdits produits s'enroulent autour du noyau de balle déjà formé, qui augmente de diamètre jusqu'à constituer une balle complète.

Quand cette balle a atteint le diamètre requis, l'opération de liage est déclenchée d'une manière en soi bien connue. A ce moment, la courte bande transporteuse 24 et le ramasseur 26 sont à nouveau déplacés vers le bas par pivotement, de sorte que les produits de récolte reposant sur le sol sont maintenant repris par ce ramasseur 26 et transférés à la chambre primaire 22, dans laquelle un autre noyau de balle peut se former pendant le liage de la balle précédente et son déchargement.

Le cycle décrit ci-dessus se répète quand la balle a été déchargée à partir de la chambre principale et lorsque la porte 3 de la presse a été refermée.

Les moyens prévus sur la presse pour commander les différents mouvements, plus spécialement le relevage et l'abaissement du rouleau de renvoi 16, le pivotement de la bande transporteuse 24 avec le ramasseur 26, etc peuvent être d'un type classique sur les presses de ce type et sont bien connus des techniciens spécialisés dans ce domaine, de sorte qu'il ne semble pas nécessaire de les décrire en détail.

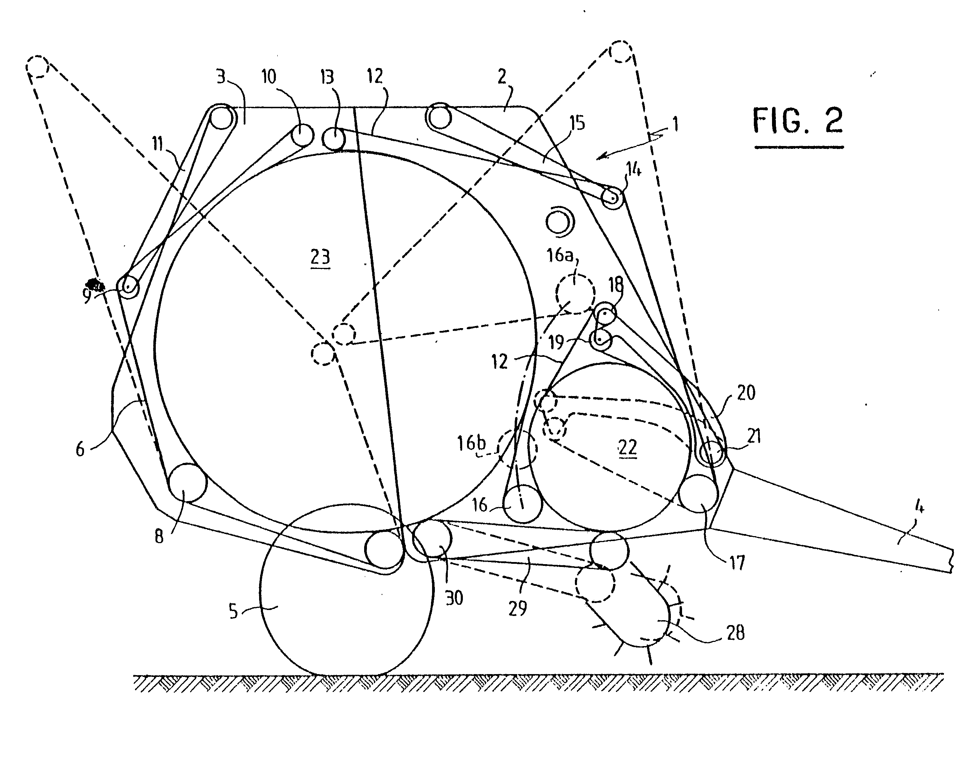

On a représenté sur la Fig. 2 des dessins, sur laquelle les mêmes références que précédemment ont été utilisées pour désigner des éléments correspondants, une variante de réalisation de la presse, comprenant un seul ramasseur 28 qui est relié à une bande transporteuse 29 montée de façon pivotante autour de son rouleau de renvoi arrière 30.

Cette bande transporteuse 29 et le ramasseur 28 peuvent occuper, au cours du travail, deux positions différentes. Une position est représentée en traits pleins sur la Fig. 2, dans laquelle les produits de récolte ramassés sont dirigés directement vers la chambre primaire 22 de la presse, cette chambre étant délimitée à sa partie inférieure par une partie de la bande transporteuse 29 et à sa partie arrière par les bandes ou courroies 12 passant sur le rouleau de renvoi 16 en position inférieure, de sorte qu'il se forme ici encore à l'intérieur de cette chambre primaire 22 un noyau de balle dense et serré, du fait de la pression exercée sur les produits de récolte par le brin des bandes ou courroies 12 s'étendant entre le rouleau 17 et les rouleaux 18, 19 sous l'effet des organes élastiques agissant de façon classique sur les bras 20. Ces bras 20 subissent ici encore un mouvement d'effacement au fur et à mesure de l'augmentation de diamètre de ce noyau de balle, d'une manière en soi usuelle sur les presses de ce type.

Quand la balle, dont la formation a été complétée dans la chambre principale 23 de la presse, a subi l'opération de liage et a été déchargée et lorsque la porte arrière 3 de la presse a été refermée, le rouleau 16 est relevé jusqu'à la position supérieure indiquée en 16a, ce qui ménage un passage entre la chambre primaire 22 et la chambre principale 23 pour permettre le transfert d'un noyau de balle formé dans cette chambre primaire, transfert qui a lieu sous l'effet de l'entraînement assuré par la bande transporteuse 29 et du fait que le noyau de balle n'est plus retenu à l'arrière par les brins des bandes ou courroies 12 qui s'étendaient entre les deux chambres.

Après ce transfert, le rouleau de renvoi 16 est abaissé à nouveau, mais cette fois seulement jusqu'à la position indiquée en pointillé en 16b, et la bande transporteuse 29 est elle-même abaissée par pivotement autour de son rouleau de renvoi arrière 30, pour venir occuper la position indiquée en pointillé, le ramasseur avant 28 pivotant légèrement vers le haut par rapport à la bande transporteuse 29 pour éviter son contact avec le sol. Ces positions du rouleau de renvoi en 16b, de la bande transporteuse 29 et du ramasseur 28 assurent l'acheminement des produits ramassés sur le sol directement vers la chambre principale 23 de la presse, pour que la formation de la balle puisse se poursuivre dans cette chambre.

Quand la balle a atteint le diamètre requis, l'opération de liage est déclenchée. Simultanément, le rouleau de renvoi est amené de la position 16b à la position 16 et la bande transporteuse 29 est relevée jusqu'à la position indiquée en traits pleins, de sorte que les produits de récolte qui continuent d'être ramassés par le ramasseur 28 sont alors dirigés directement vers la chambre primaire 22, pour la formation ici encore d'un noyau de balle dense et serré pendant le liage et le déchargement de la balle de diamètre maximum.

Le cycle décrit ci-dessus se répète ensuite de la même manière.

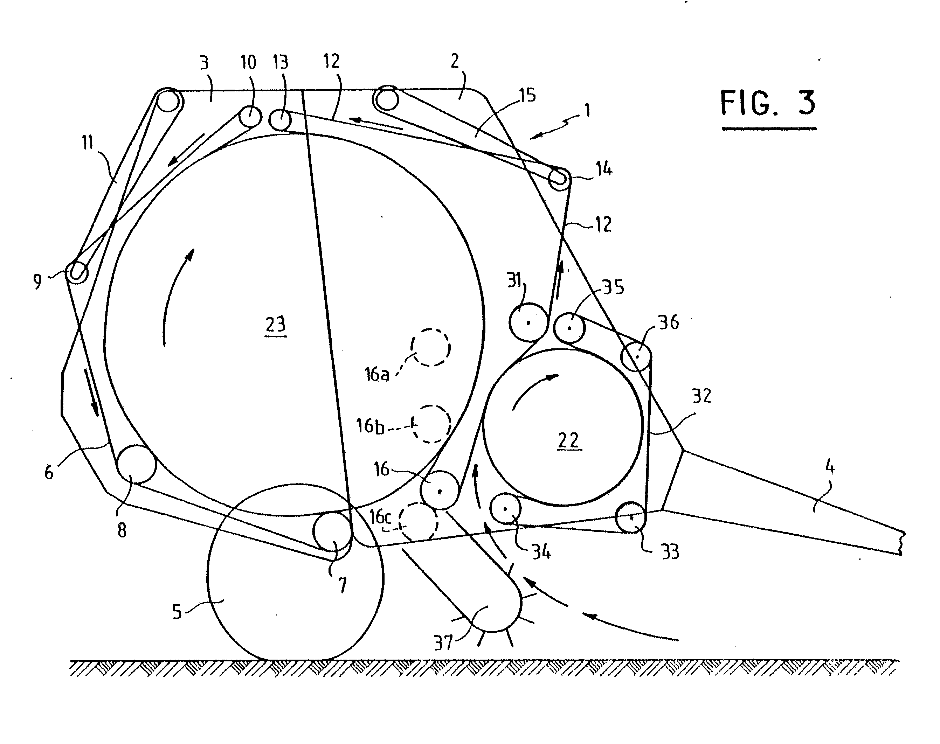

On a montré sur la Fig. 3, sur laquelle les mêmes références que précédemment ont été utilisées pour désigner des organes équivalents, une autre variante encore de la presse suivant l'invention.

Dans ce cas, les bandes ou courroies 12 qui passent sur le rouleau 16 passent également sur un rouleau de renvoi fixe 31 au lieu du rouleau 18 mentionné précédemment. Il est prévu par ailleurs un troisième jeu de bandes ou courroies 32, qui passent sur des rouleaux fixes 33, 34, 35 ainsi que sur un rouleau de tension mobile 36 supporté par des bras (non représentés) d'une manière en soi classique, ces bandes ou courroies 32 délimitant avec les rouleaux précités les parties supérieure et avant de la chambre primaire 22, ainsi qu'une portion de la partie supérieure de cette chambre. Il est prévu en outre sur la presse un ramasseur fixe 37, qui est situé sensiblement entre les chambres primaire 22 et principale 23.

Pendant les opérations de liage d'une balle dans la chambre principale 23 de la presse et de déchargement de cette balle, le rouleau de renvoi 16 occupe la position inférieure indiquée en pointillé en 16c, ce qui, par l'intermédiaire des bandes ou courroies 12 se déplaçant dans le sens indiqué, provoque le renvoi des produits de récolte ramassés sur le sol vers la chambre primaire 22, pour la formation d'un noyau de balle dense et serré à l'intérieur de cette chambre.

Quand le déchargement de la balle est terminé et lorsque la porte arrière de la presse est refermée, le rouleau 16 est relevé comme précédemment jusqu'à une position 16a qui ménage un passage entre les chambres primaire 22 et principale 23. Le noyau de balle formé dans la chambre primaire 22 est alors transféré jusque dans la chambre principale 23 sous l'effet de la force élastique agissant par l'intermédiaire des bandes ou courroies 32 à partir du rouleau de renvoi 36. Quand ce transfert est terminé, le rouleau de renvoi 16 est ramené vers le bas jusqu'à la position indiquée en traits pleins ou jusqu'à une position indiquée en 16b qui ménage un libre passage pour les produits de récolte ramassés par le ramasseur 37 directement vers la chambre principale 23.

Quand la balle formée dans cette chambre principale a atteint son diamètre maximum, l'opération de liage est déclenchée de la manière habituelle et le rouleau de renvoi 16 est déplacé vers le bas jusqu'à la position inférieure indiquée en 16c, ce qui intercepte les produits de récolte ramassés par le ramasseur 27 pour les diriger vers la chambre primaire 22 dans laquelle il se forme à nouveau un noyau de balle.

Ici encore, le cycle décrit ci-avant se répète après le liage et le déchargement d'une balle.

On voit que, dans chacun des modes de réalisation considérés, il se forme dans la chambre primaire de la presse, pendant le liage d'une balle dans la chambre principale et pendant son déchargement par la porte arrière de la presse, un noyau de balle dense et serré, qui est ensuite transféré à la chambre principale quand la porte arrière est refermée après le déchargement d'une balle. Ainsi, la presse peut poursuivre sa progression dans le champ pendant les opérations de liage et de déchargement.

Ce résultat est obtenu sans augmentation notable de la longueur du châssis de la presse ou de son poids, étant donné que la chambre primaire de formation du noyau est délimitée au moins en partie par les bandes ou courroies constituant également la chambre principale et que cette chambre primaire n'est séparée de cette chambre principale que par un double brin de bandes ou courroies passant sur un rouleau de renvoi qui est déplaçable entre une position inférieure de séparation des chambres et une position supérieure d'établissement d'un passage de transfert de l'une à l'autre. On comprend que, dans cette partie de la presse, les brins des bandes ou courroies peuvent être très rapprochés l'un de l'autre, de sorte qu'il en résulte sensiblement une juxtaposition des deux chambres, ce qui réduit au minimum l'encombrement. Par ailleurs, les produits de récolte ramassés sont dirigés directement vers l'une ou l'autre des chambres considérées.

Des modifications peuvent être apportées au mode de réalisation décrit, dans le domaine des équivalences techniques, sans s'écarter de l'invention.

**Description** (pour les Etats contractants : IT, NL)

La présente invention se rapporte d'une façon générale aux presses à balles cylindriques ou rondes du type comportant des jeux de bandes ou courroies qui, par leur déplacement, forment par enroulement à l'intérieur d'une chambre ménagée dans le corps de la presse une balle de forme générale cylindrique de grand diamètre à partir de produits de récolte, notamment de fourrage ou de foin ramassés sur le champ par un ramasseur au cours de la progression de la presse et amenés en nappe à la chambre de formation de la balle. Lorsque la balle ainsi formée a atteint le diamètre requis, elle est soumise à une opération de liage, puis éjectée ou déchargée généralement par un système de porte prévu à l'arrière de la presse.

On comprend que les opérations de liage et de déchargement des balles formées dans la chambre de la presse exigent un certain laps de temps, pendant lequel la presse est à l'arrêt, ce qui réduit en conséquence le rendement d'une machine de ce type.

Un inconvénient des presses à balles cylindriques, dont les avantages par rapport aux presses à balles rectangulaires sont bien connus, réside justement dans cette réduction de rendement ou de capacité qui résulte des temps d'arrêt nécessaires au liage et au déchargement.

Or la tendance actuelle dans le machinisme agricole est d'augmenter autant que possible la capacité ou le rendement des machines ou appareils utilisés dans une exploitation.

On a déjà proposé de remédier à cet inconvénient d'une manière permettant à la presse à balles cylindriques de poursuivre sa progression à travers le champ et de continuer à ramasser les produits de récolte pendant l'opération de liage et de déchargement de la balle déjà formée dans la presse. Ainsi, on a décrit dans le brevet US-A-3 004 377 un agencement permettant de retenir ou d'accumuler sur la presse les produits de récolte ramassés pendant le liage et le déchargement d'une balle.

Un agencement visant au même but se retrouve dans le Brevet US-A-4 145 964, qui décrit une presse dans laquelle un organe en forme de grille vient se placer entre le ramasseur ou le dispositif élévateur associé et la chambre de la presse quand une balle a atteint le diamètre requis et est en cours de liage, puis de déchargement maintenu en place, cet organe en forme de grille étant ensuite déplacé automatiquement pour son effacement, en permettant alors aux produits de récolte accumulés de pénétrer dans la chambre de la presse.

Un agencement analogue encore a été proposé dans la Demande de Brevet allemand DE-A-2 634 638, dans laquelle l'organe interceptant les produits de récolte et venant s'interposer entre le ramasseur ou l'élévateur et la chambre de la presse pendant le liage et le déchargement d'une balle est constitué par une ou plusieurs bandes transporteuses passant sur des rouleaux, l'ensemble étant déplacé automatiquement pour parvenir en position d'interception pendant le liage et le déchargement et pour être ramené en position d'effacement en vue de la formation normale d'une balle.

Si les agencements connus remédient à l'inconvénient que représente la nécessité d'arrêter la presse pendant le liage et le déplacement d'une balle, un autre inconvénient réside toutefois dans le fait que la masse de produits de récolte ainsi retenue pendant ces opérations de liage et de déchargement n'est pas comprimée au degré souhaitable pour former le noyau d'une nouvelle balle au moment de son transfert dans la chambre de la presse.

Or il est désirable, comme on l'a constaté, pour obtenir des balles ayant une tenue maximum et pour faciliter leur formation dans la chambre de la presse, que les produits de récolte ramassés pendant les opérations de liage et de déchargement soient eux-mêmes comprimés pour constituer effectivement un noyau autour duquel la balle va pouvoir continuer d'être formée dans la chambre de la presse.

On a déjà proposé d'apporter une solution à ce problème dans les Brevets US-A-4 009 559, 4 011 711, 4 022 003, 4 035 999, 4 052 841, 4 057 954 et 4 062 172. Il est prévu, dans chacun des agencements auxquels ces Brevets US antérieurs se rapportent, un châssis de presse relativement long, sur lequel sont montés deux systèmes de bandes ou courroies qui ménagent deux chambres indépendantes d'enroulement des produits, à savoir une chambre arrière de formation proprement dite d'une balle cylindrique ou ronde pouvant atteindre le diamètre requis, dans laquelle s'effectue le liage et à partir de laquelle la balle terminée est déchargée, et une chambre avant dans laquelle il se forme par enroulement un noyau de balle à partir de produits de récolte pendant les opérations de liage et de déchargement d'une balle terminée, des moyens étant prévus pour retenir les produits de récolte à l'intérieur de cette première chambre pendant ces opérations de liage et de déchargement. La presse est alors équipée à sa partie avant d'un ramasseur de type usuel et, dans sa partie inférieure, d'un transporteur de grande longueur sur lequel les produits de récolte se déplacent en franchissant sans interception la zone correspondant à la chambre avant pour la formation de la balle dans la chambre arrière.

Un inconvénient évident d'un agencement de ce type réside dans l'augmentation de longueur importante qui en résulte alors pour la presse, du fait de la présence de deux chambres placées l'une derrière l'autre sur le châssis de la presse et définies par deux systèmes de bandes ou courroies indépendants l'un de l'autre.

Aussi a-t-on également proposé, par exemple dans EP-A-0 064 117, une réalisation à deux chambres placées l'une derrière l'autre sur le châssis de la presse et définies par un système de bandes ou courroies unique avec des moyens de transfert entre lesdites chambres constitués par un dispositif en forme de tambour ou d'embarrage à pluralité de rouleaux. Ces moyens de transfert occupent un volume important de la presse dont ils accroissent par ailleurs le coût en raison de leur structure relativement complexe.

Le but de l'invention est d'apporter une solution nouvelle au problème ainsi posé, en permettant la réalisation d'une presse à balles cylindriques ou rondes capable de former, pendant le liage et le déchargement d'une balle, un noyau de balle dense à partir des produits de récolte ramassés, sans augmenter de façon inacceptable les dimensions de la presse ou son poids.

On parvient à ce résultat suivant l'invention, dans le cas d'une presse à balles cylindriques ou rondes conforme à DE-A-2 634 638 du type dans lequel les produits de récolte amenés en nappe à la chambre de formation principale d'une balle au moyen d'au moins un ramasseur ou dispositif équivalent, subissent à l'intérieur de cette chambre un enroulement sous l'effet de bandes ou courroies entraînées de façon positive, pour former par enroulement sur elle-même de cette nappe de produits de récolte une balle cylindrique ou ronde qui est liée puis déchargée quand elle a atteint le diamètre désiré, les bandes ou courroies délimitant en partie la chambre principale de formation de la balle, délimitant également au moins de façon partielle une chambre primaire de réception des produits de récolte, des moyens ménageant un passage de transfert des produits de récolte de la chambre principale après le déchargement d'une balle à partir de celle-ci, par le fait que, au moins un ramasseur est prévu pour diriger sélectivement les produits de récolte depuis le sol vers cette chambre principale ou vers cette chambre primaire, et en ce que ladite chambre primaire est une chambre de formation d'un noyau de balle par enroulement et par compression sous l'effet desdites bandes ou courroies.

Suivant un mode de réalisation paraissant avantageux, les bandes ou courroies d'enroulement des produits de récolte pour la formation de la balle dans la chambre principale passent, dans une zone située entre les chambres primaire et principale, autour d'un rouleau de renvoi déplaçable entre une position inférieure dans laquelle ces bandes ou courroies s'étendent entre les deux chambres, et une position supérieure dans laquelle un passage est ménagé entre lesdites chambres.

Ainsi, les deux chambres principale et primaire peuvent être ménagées l'une derrière l'autre sur un châssis de presse sensiblement normal, sans augmenter de façon inacceptable ou pour le moins gênante la longueur dudit châssis, étant donné que les mêmes bandes ou courroies et le même rouleau de renvoi interviennent pour la délimitation de ces deux chambres. La distance entre les chambres primaire et principale est en effet réduite alors à une valeur minimum, étant donné que les brins de bandes ou courroies passant sur le rouleau de renvoi peuvent être extrêmement rapprochés.

Suivant un mode de réalisation possible, les bandes ou courroies peuvent s'étendre selon des trajets définis par des rouleaux de renvoi tels qu'elles délimitent en totalité ou presque en totalité la chambre primaire de formation d'un noyau de balle, cette chambre étant complétée éventuellement par une courte bande transporteuse inférieure, ou bien elles peuvent former simplement la partie de cette chambre primaire qui est adjacente à la chambre principale.

Suivant un agencement possible, il est prévu sur la presse deux ramasseurs ou dispositifs analogues, dont l'un est associé à la chambre primaire avant et l'autre à la chambre principale, au moins le ramasseur avant étant monté de façon déplaçable afin de pouvoir être relevé pendant la formation normale d'une balle dans la chambre principale. Pendant les opérations de liage et de déchargement, le ramasseur avant se trouve en position abaissée, afin de ramasser les produits de récolte et de les diriger vers la chambre primaire de formation d'un noyau. Quand le déchargement de la balle est terminé, et lorsque la porte arrière de la presse est refermée, le ramasseur avant est relevé afin que les produits de récolte soient saisis par le ramasseur arrière et dirigés vers la chambre principale de la presse.

Suivant une variante de réalisation, il est prévu sur la presse un ramasseur unique associé à une bande transporteuse inférieure, ces éléments étant déplaçables entre une position dans laquelle le ramasseur dirige les produits de récolte vers la chambre primaire, et une autre position dans laquelle ces produits de récolte sont dirigés par ce ramasseur sur la bande transporteuse pour leur transfert à la chambre principale.

Suivant une autre variante encore, on peut prévoir un ramasseur unique disposé sensiblement entre les chambres primaire et principale et dirigeant normalement les produits de récolte ramassés vers la chambre principale, en combinaison avec des moyens déviant ces produits de récolte vers la chambre primaire pendant le liage d'une balle dans la chambre principale et son déchargement à partir de celle-ci. Ces moyens peuvent être constitués par un dispositif déflecteur, ou bien directement par le rouleau de renvoi intermédiaire déplaçable, qui peut venir occuper alors une autre position basse provoquant cette déviation des produits de récolte vers la chambre primaire de la presse.

Dans chaque cas, la fermeture de la porte commande le relevage du rouleau de renvoi intermédiaire, ce qui établit un passage entre la chambre primaire et la chambre principale, et des moyens sont prévus pour assurer le transfert du noyau de balle formé dans cette chambre primaire jusque dans cette chambre principale. Ces moyens peuvent être constitués simplement par les organes élastiques agissant sur des rouleaux de renvoi des bandes ou courroies de chambre primaire, qui tendent à repousser le noyau de balle vers la chambre principale quand il n'est plus retenu par le brin de bandes passant sur le rouleau de renvoi intermédiaire déplaçable. Ce transfert peut également être assuré ou au moins facilité par la bande transporteuse éventuellement prévue vers la partie inférieure de la chambre primaire.

La description qui va suivre, faite en regard des dessins annexés, donnés à titre non limitatif, permettra de mieux comprendre l'invention.

La figure 1 est une vue schématique de profil d'une presse à balles cylindriques ou rondes agencée suivant l'invention.

La figure 2 est une vue analogue correspondant à une variante.

La figure 3 est une vue analogue correspondant à une autre variante encore.

Sur la figure 1, on a désigné par la référence 1 une presse à balles cylindriques ou rondes de grand diamètre dont le châssis et le corps n'ont pas été représentés en détail. Ce corps comprend une partie fixe avant 2 et une porte relevable arrière 3. Le châssis est équipé d'une flèche d'attelage 4 permettant d'atteler la presse à un tracteur. Il est supporté par une paire de roues 5.

La presse comporte un premier jeu de bandes ou courroies 6 passant sur des rouleaux de renvoi fixes 7 et 8 et sur des rouleaux de renvoi mobiles 9 et 10, les bras de support du rouleau mobile 9 ayant été indiqués en 11. Les ressorts de sollicitation des bras mettant les bandes en tension, en soi classiques, n'ont pas été représentés. On a indiqué en pointillé la position des bandes ou courroies 6 au début de la formation d'une balle et en traits pleins la position de ces bandes ou courroies 6 quand la balle a atteint son diamètre maximum.

La presse comprend également, d'une manière en soi classique, un second jeu de bandes ou courroies 12. On a indiqué en 13 et 14 deux rouleaux de renvoi mobiles de ces bandes ou courroies, le rouleau 14 étant porté par des bras 15. Ici encore, les organes élastiques de sollicitation des bras de tension des bandes ou courroies n'ont pas été représentés.

Suivant l'invention, il est prévu en combinaison avec les bandes ou courroies 12 un rouleau de renvoi mobile 16, déplaçable dans une direction sensiblement verticale. Ce rouleau a été illustré en traits pleins en 16 dans une position de travail de la presse et en pointillé en 16a dans une position de transfert qui sera décrite plus loin.

Dans le cas de l'agencement représenté, les bandes ou courroies 12 passent également sur un rouleau fixe 17 prévu à la partie avant de la presse, ainsi que sur deux rouleaux 18, 19 portés par un bras 20 monté à pivotement en 21 également vers la partie avant de la presse.

On voit sur la Fig. 1, que, dans la condition des bandes ou courroies 6 et 12 représentée en traits pleins, dans laquelle le rouleau 16 occupe sa position inférieure, les brins de bandes voisins de ce rouleau divisent la presse en deux chambres, à savoir une chambre avant ou primaire 22 et une chambre arrière ou principale 23.

La chambre 22 est délimitée sur sa presque totalité par les bandes ou courroies 12, du fait de leur passage autour du rouleau 16 en position inférieure, sur les rouleaux 18 et 19 et sur le rouleau 17. Cette chambre 22 est complétée, dans la condition de travail représentée en traits pleins, par un court transporteur à bande inférieur 24 pouvant pivoter autour de l'axe de son rouleau de renvoi arrière 25 et portant un ramasseur indiqué schématiquement en 26. Un autre ramasseur 27 est représenté schématiquement en arrière du précédent, juste en avant des roues 5.

La position de la presse représentée en traits pleins sur la Fig. 1 correspond à la condition obtenue à la fin de l'opération de liage, au moment du déchargement d'une balle liée à partir de la chambre principale 23 de la presse. Le ramasseur 26 se trouve alors en position basse, de sorte que pendant la progression de la presse à travers le champ durant l'opération de liage, les produits de récolte ramassés par le ramasseur 26 sont dirigés vers la chambre primaire 22, dans laquelle il se forme, par enroulement, un noyau de balle comme indiqué, entre les parties conjuguées des bandes 12 et le transporteur inférieur 24. La condition illustrée en traits pleins correspond à un diamètre en principe maximum du noyau de balle ainsi formé dans la chambre primaire 22.

En conséquence, pendant les opérations de liage et de déchargement d'une balle formée dans la chambre principale 23, la presse peut continuer sa progression à travers le champ, les produits ramassés formant dans la chambre primaire 22 un noyau de balle dense ou serré par enroulement entre les brins de bandes 12, du fait de la tension exercée par les ressorts en soi usuels agissant sur les bras 20 portant les rouleaux mobiles 18, 19 de la presse.

Lorsque l'opération de déchargement est terminée et quand la porte 3 de la presse est refermée, le rouleau de renvoi 16 est déplacé vers le haut jusqu'à la position 16a, les bandes ou courroies occupant alors les positions indiquées en pointillé. Ce relevage du rouleau 16 jusqu'à la position 16a établit ainsi un passage entre la chambre primaire 22 et la chambre principale 23 de la presse, de sorte que le noyau de balle formé dans la chambre primaire 22 peut être transféré de celle-ci dans la chambre principale. Ce transfert est assuré par le fait que ce noyau de balle n'est plus retenu à sa partie arrière par les bandes ou courroies 12 passant sur le rouleau 16. Après ce transfert, la courte bande transporteuse 24 est relevée avec le ramasseur 26 par pivotement autour de l'axe 25 de son rouleau de renvoi arrière, pour venir occuper la position indiquée en pointillé, et le bras 20 bascule vers le bas autour de l'axe 21 pour venir également occuper la position indiquée en pointillé.

Après le transfert du noyau de balle de la chambre primaire 22 dans la chambre principale 23, le rouleau de renvoi 16 est à nouveau abaissé pour revenir de la position 16a à la position inférieure représentée en traits pleins, ce qui limite à nouveau la chambre principale à sa partie avant.

Etant donné que le ramasseur 26 est relevé, il ne ramasse plus les produits de récolte reposant sur le sol en andain, et ces produits de récolte sont repris par le ramasseur 27 et transférés alors directement à la chambre principale 23, dans laquelle lesdits produits s'enroulent autour du noyau de balle déjà formé, qui augmente de diamètre jusqu'à constituer une balle complète.

Quand cette balle a atteint le diamètre requis, l'opération de liage est déclenchée d'une manière en soi bien connue. A ce moment, la courte bande transporteuse 24 et le ramasseur 26 sont à nouveau déplacés vers le bas par pivotement, de sorte que les produits de récolte reposant sur le sol sont maintenant repris par ce ramasseur 26 et transférés à la chambre primaire 22, dans laquelle un autre noyau de balle peut se former pendant le liage de la balle précédente et son déchargement.

Le cycle décrit ci-dessus se répète quand la balle a été déchargée à partir de la chambre principale et lorsque la porte 3 de la presse a été refermée.

Les moyens prévus sur la presse pour commander les différents mouvements, plus spécialement le relevage et l'abaissement du rouleau de renvoi 16, le pivotement de la bande transporteuse 24 avec le ramasseur 26, etc peuvent être d'un type classique sur les presses de ce type et sont bien connus des techniciens spécialisés dans ce domaine, de sorte qu'il ne semble pas nécessaire de les décrire en détail.

On a représenté sur la Fig. 2 des dessins, sur laquelle les mêmes références que précédemment ont été utilisées pour désigner des éléments correspondants, une variante de réalisation de la presse, comprenant un seul ramasseur 28 qui est relié à une bande transporteuse 29 montée de façon pivotante autour de son rouleau de renvoi arrière 30.

Cette bande transporteuse 29 et le ramasseur 28 peuvent occuper, au cours du travail, deux positions différentes. Une position est représentée en traits pleins sur la Fig. 2, dans laquelle les produits de récolte ramassés sont dirigés directement vers la chambre primaire 22 de la presse, cette chambre étant délimitée à sa partie inférieure par une partie de la bande transporteuse 29 et à sa partie arrière par les bandes ou courroies 12 passant sur le rouleau de renvoi 16 en position inférieure, de sorte qu'il se forme ici encore à l'intérieur de cette chambre primaire 22 un noyau de balle dense et serré, du fait de la pression exercée sur les produits de récolte par le brin des bandes ou courroies 12 s'étendant entre le rouleau 17 et les rouleaux 18, 19 sous l'effet des organes élastiques agissant de façon classique sur les bras 20. Ces bras 20 subissent ici encore un mouvement d'effacement au fur et à mesure de l'augmentation de diamètre de ce noyau de balle, d'une manière en soi usuelle sur les presses de ce type.

Quand la balle, dont la formation a été complétée dans la chambre principale 23 de la presse, a subi l'opération de liage et a été déchargée et lorsque la porte arrière 3 de la presse a été refermée, le rouleau 16 est relevé jusqu'à la position supérieure indiquée en 16a, ce qui ménage un passage entre la chambre primaire 22 et la chambre principale 23 pour permettre le transfert d'un noyau de balle formé dans cette chambre primaire, transfert qui a lieu sous l'effet de l'entraînement assuré par la bande transporteuse 29 et du fait que le noyau de balle n'est plus retenu à l'arrière par les brins des bandes ou courroies 12 qui s'étendaient entre les deux chambres.

Après ce transfert, le rouleau de renvoi 16 est abaissé à nouveau, mais cette fois seulement jusqu'à la position indiquée en pointillé en 16b, et la bande transporteuse 29 est elle-même abaissée par pivotement autour de son rouleau de renvoi arrière 30, pour venir occuper la position indiquée en pointillé, le ramasseur avant 28 pivotant légèrement vers le haut par rapport à la bande transporteuse 29 pour éviter son contact avec le sol. Ces positions du rouleau de renvoi en 16b, de la bande transporteuse 29 et du ramasseur 28 assurent l'acheminement des produits ramassés sur le sol directement vers la chambre principale 23 de la presse, pour que la formation de la balle puisse se poursuivre dans cette chambre.

Quand la balle a atteint le diamètre requis, l'opération de liage est déclenchée. Simultanément, le rouleau de renvoi est amené de la position 16b à la position 16 et la bande transporteuse 29 est relevée jusqu'à la position indiquée en traits pleins, de sorte que les produits de récolte qui continuent d'être ramassés par le ramasseur 28 sont alors dirigés directement vers la chambre primaire 22, pour la formation ici encore d'un noyau de balle dense et serré pendant le liage et le déchargement de la balle de diamètre maximum.

Le cycle décrit ci-dessus se répète ensuite de la même manière.

On a montré sur la Fig. 3, sur laquelle les mêmes références que précédemment ont été utilisées pour désigner des organes équivalents, une autre variante encore de la presse suivant l'invention.

Dans ce cas, les bandes ou courroies 12 qui passent sur le rouleau 16 passent également sur un rouleau de renvoi fixe 31 au lieu du rouleau 18 mentionné précédemment. Il est prévu par ailleurs un troisième jeu de bandes ou courroies 32, qui passent sur des rouleaux fixes 33, 34, 35 ainsi que sur un rouleau de tension mobile 36 supporté par des bras (non représentés) d'une manière en soi classique, ces bandes ou courroies 32 délimitant avec les rouleaux précités les parties supérieure et avant de la chambre primaire 22, ainsi qu'une portion de la partie supérieure de cette chambre. Il est prévu en outre sur la presse un ramasseur fixe 37, qui est situé sensiblement entre les chambres primaires 22 et principale 23.

Pendant les opérations de liage d'une balle dans la chambre principale 23 de la presse et de déchargement de cette balle, le rouleau de renvoi 16 occupe la position inférieure indiquée en pointillé en 16c, ce qui, par l'intermédiaire des bandes ou courroies 12 se déplaçant dans le sens indiqué, provoque le renvoi des produits de récolte ramassés sur le sol vers la chambre primaire 22, pour la formation d'un noyau de balle dense et serré à l'intérieur de cette chambre.

Quand le déchargement de la balle est terminé et lorsque la porte arrière de la presse est refermée, le rouleau 16 est relevé comme précédemment jusqu'à une position 16a qui ménage un passage entre les chambres primaire 22 et principale 23. Le noyau de balle formé dans la chambre primaire 22 est alors transféré jusque dans la chambre principale 23 sous l'effet de la force élastique agissant par l'intermédiaire des bandes ou courroies 32 à partir du rouleau de renvoi 36. Quand ce transfert est terminé, le rouleau de renvoi 16 est ramené vers le bas jusqu'à la position indiquée en traits pleins ou jusqu'à une position indiquée en 16b qui ménage un libre passage pour les produits de récolte ramassés par le ramasseur 37 directement vers la chambre principale 23.

Quand la balle formée dans cette chambre principale a atteint son diamètre maximum, l'opération de liage est déclenchée de la manière habituelle et le rouleau de renvoi 16 est déplacé vers le bas jusqu'à la position inférieure indiquée en 16c, ce qui intercepte les produits de récolte ramassés par le ramasseur 27 pour les diriger vers la chambre primaire 22 dans laquelle il se forme à nouveau un noyau de balle.

Ici encore, le cycle décrit ci-avant se répète après le liage et le déchargement d'une balle.

On voit que, dans chacun des modes de réalisation considérés, il se forme dans la chambre primaire de la presse, pendant le liage d'une balle dans la chambre principale et pendant son déchargement par la porte arrière de la presse, un noyau de balle dense et serré, qui est ensuite transféré à la chambre principale quand la porte arrière est refermée après le déchargement d'une balle. Ainsi, la presse peut poursuivre sa progression dans le champ pendant les opérations de liage et de déchargement.

Ce résultat est obtenu sans augmentation notable de la longueur du châssis de la presse ou de son poids, étant donné que la chambre primaire de formation du noyau est délimitée au moins en partie par les bandes ou courroies constituant également la chambre principale et que cette chambre primaire n'est séparée de cette chambre principale que par un double brin de bandes ou courroies passant sur un rouleau de renvoi qui est déplaçable entre une position inférieure de séparation des chambres et une position supérieure d'établissement d'un passage de transfert de l'une à l'autre. On comprend que, dans cette partie de la presse, les brins des bandes ou courroies peuvent être très rapprochés l'un de l'autre, de sorte qu'il en résulte sensiblement une juxtaposition des deux chambres, ce qui réduit au minimum l'encombrement. Par ailleurs, les produits de récolte ramassés sont dirigés directement vers l'une ou l'autre des chambres considérées.

Des modifications peuvent être apportées au mode de réalisation décrit, dans le domaine des équivalences techniques, sans s'écarter de l'invention.

**Revendications** (pour les Etats contractants : DE, FR, GB)

1. Presse à balles cylindriques ou rondes du type dans lequel les produits de récolte, amenés en nappe à la chambre de formation (23) principale d'une balle au moyen d'au moins un ramasseur (26, 27, 28, 37) ou dispositif équivalent, subissent à l'intérieur de cette chambre un enroulement sous l'effet de bandes ou courroies (6, 12) entraînées de façon positive, pour former par enroulement sur elle-même de cette nappe de produits de récolte une balle cylindrique ou ronde qui est liée puis déchargée quand elle a atteint le diamètre désiré, les bandes ou courroies (12) délimitant en partie la chambre principale (23) de formation de la balle délimitant également au moins de façon partielle une chambre primaire (22) de réception des produits de récolte où lesdits produits sont enroulés et compressés sous l'effet desdites bandes ou courroies (12) pour former un noyau de balle, un rouleau de renvoi (16) des bandes ou courroies (12), déplaçable entre une position inférieure dans laquelle ces bandes ou courroies (12) s'étendent entre les deux chambres (22, 23) et une position supérieure dans laquelle un passage est ménagé entre lesdites chambres, étant prévu pour ouvrir et/ou fermer ledit passage pour le transfert du noyau de balle de la chambre primaire (22) vers la chambre principale (23) après le déchargement d'une balle à partir de cette dernière, le ou les ramasseur(s) (26, 27, 28, 37) et, le cas échéant, un transporteur à bande (24) étant prévu(s) pour diriger sélectivement les produits de récolte depuis le sol vers cette chambre principale (23) ou vers cette chambre primaire (22).

2. Presse à balles cylindriques suivant la revendication 1, caractérisée en ce que les bandes ou courroies (12) de formation de la balle sont disposées selon un trajet défini par des rouleaux de renvoi (16, 31) tel qu'elles délimitent simplement la partie de la chambre primaire (22) qui est adjacente à la chambre principale (23) et en ce qu'il est prévu un jeu de bandes ou courroies additionnelles (32) passant sur des rouleaux de renvoi (33, 36) et délimitant la partie restante de la chambre primaire (22).

3. Presse à balles selon la revendication 1 ou la revendication 2, caractérisée en ce qu'elle comprend deux ramasseurs (26, 27) ou dispositifs analogues dont l'un est monté de manière à diriger les produits de récolte ramassés sur le sol vers la chambre primaire (22) tandis que l'autre est monté de manière à diriger ces produits de récolte vers la chambre principale (23), au moins le ramasseur (26) associé à la chambre primaire (22), ou ramasseur avant, étant monté de façon déplaçable, afin de pouvoir être relevé pendant la formation normale d'une balle dans la chambre principale (23).

4. Presse à balles cylindriques suivant l'une quelconque des revendications 1 à 3, caractérisée en ce qu'elle comporte un ramasseur unique (28) associé à une bande transporteuse inférieure (29), ces éléments étant déplaçables entre une position dans laquelle le ramasseur dirige les produits de récolte vers la chambre primaire (22) et une autre position dans laquelle ces produits de récolte sont dirigés par ce ramasseur sur la bande transporteuse (29) pour leur transfert à la chambre principale (23).

5. Presse à balles selon l'une quelconque des revendications 1 et 2, caractérisée en ce qu'elle comporte un ramasseur unique (37) disposé sensiblement entre les chambres primaire (22) et principale (23) et dirigeant normalement les produits de récolte ramassés vers la chambre principale, en combinaison avec des moyens (16) déviant ces produits de récolte vers la chambre primaire pendant le liage d'une balle dans la chambre principale et son déchargement à partir de celle-ci.

6. Presse à balles cylindriques suivant la revendication 5, caractérisée en ce que ces moyens de déviation sont constitués par un dispositif déflecteur ou bien directement par le rouleau de renvoi intermédiaire (16), qui est alors déplaçable jusque dans une position inférieure (16c) de déviation des produits.

7. Presse à balles cylindriques selon l'une quelconque des revendications précédentes, caractérisée en ce que des moyens sont prévus pour commander le relevage du rouleau de renvoi déplaçable (16) prévu entre les chambres (22, 23) lors de la fermeture de la porte de la presse.

**Revendications** (pour les Etats contractants : IT, NL)

1. Presse à balles cylindriques ou rondes du type dans lequel les produits de récolte, amenés en nappe à la chambre de formation (23) principale d'une balle au moyen d'au moins un ramasseur (26, 27, 28, 37) ou dispositif équivalent, subissent à l'intérieur de cette chambre un enroulement sous l'effet de bandes ou courroies (6, 12) entraînées de façon positive, pour former par enroulement sur elle-même de cette nappe de produits de récolte une balle cylindrique ou ronde qui est liée puis déchargée quand elle a atteint le diamètre désiré, les bandes ou courroies (12) délimitant en partie la chambre principale (23) de formation de la balle délimitant également au moins de façon partielle une chambre primaire (22) de réception des produits de récolte, des moyens (16) ménageant un passage de transfert des produits de récolte de la chambre primaire vers la chambre principale après le déchargement d'une balle à partir de celle-ci, caractérisée en ce que, au moins un ramasseur (26, 27, 28, 37) est prévu pour diriger sélectivement les produits de récolte depuis le sol vers cette chambre principale (23) ou vers cette chambre primaire (22), et en ce que ladite chambre primaire (22) est une chambre de formation d'un noyau de balle par enroulement et par compression sous l'effet desdites bandes ou courroies (12).

2. Presse à balles cylindriques suivant la revendication 1, caractérisée en ce que les bandes ou courroies (12) d'enroulement des produits de récolte pour la formation de la balle dans la chambre principale (23) passent, dans une zone située entre les chambres primaire (22) et principale (23), autour d'un rouleau de renvoi (16) déplaçable entre une position inférieure dans laquelle ces bandes ou courroies (12) s'étendent entre les deux chambres, et une position supérieure dans laquelle un passage est ménagé entre lesdites chambres.

3. Presse à balles cylindriques suivant la revendication 1 ou 2, caractérisée en ce que les bandes ou courroies (12) sont disposées selon des trajets définis par des rouleaux de renvoi (16, 17, 18, 19) tels qu'elles délimitent en totalité ou presque en totalité la chambre primaire (22) de formation d'un noyau de balle.

4. Presse à balles cylindriques suivant la revendication 3, caractérisée en ce que la chambre primaire (22) est complétée par une courte bande transporteuse inférieure (24, 29).

5. Presse à balles cylindriques suivant la revendication 1 ou 2, caractérisée en ce que les bandes ou courroies (12) de formation de la balle sont disposées selon un trajet défini par des rouleaux de renvoi (16, 31) tel qu'elles délimitent simplement la partie de la chambre primaire (22) qui est adjacente à la chambre principale (23) et en ce qu'il est prévu un jeu de bandes ou courroies additionnelles (32) passant sur des rouleaux de renvoi (33, 36) et délimitant la partie restante de la chambre primaire (22).

6. Presse à balles cylindriques suivant l'une quelconque des revendications précédentes, caractérisée en ce qu'elle comprend deux ramasseurs (26, 27) ou dispositifs analogues dont l'un est monté de manière à diriger les produits de récolte ramassés sur le sol vers la chambre primaire (22) tandis que l'autre est monté de manière à diriger ces produits de récolte vers la chambre principale (23), au moins le ramasseur (26) associé à la chambre primaire (22), ou ramasseur avant, étant monté de façon déplaçable, afin de pouvoir être relevé pendant la formation normale d'une balle dans la chambre principale (23).

7. Presse à balles cylindriques suivant l'une quelconque des revendications 1 à 5, caractérisée en ce qu'elle comporte un ramasseur unique (28) associé à une bande transporteuse inférieure (29), ces éléments étant déplaçables entre une position dans laquelle le ramasseur dirige les produits de récolte vers la chambre primaire (22) et une autre position dans laquelle ces produits de récolte sont dirigés par ce ramasseur sur la bande transporteuse (29) pour leur transfert à la chambre principale (23).

8. Presse à balles cylindriques suivant l'une quelconque des revendications 1 à 5, caractérisée en ce qu'elle comporte un ramasseur unique (37) disposé sensiblement entre les chambres primaire (22) et principale (23) et dirigeant normalement les produits de récolte ramassés vers la chambre principale, en combinaison avec des moyens (16) déviant ces produits de récolte vers la chambre primaire pendant le liage d'une balle dans la chambre principale et son déchargement à partir de celle-ci.

9. Presse à balles cylindriques suivant la revendication 8, caractérisée en ce que ces moyens de déviation sont constitués par un dispositif déflecteur ou bien directement par le rouleau de renvoi intermédiaire (16), qui est alors déplaçable jusque dans une position inférieure (16c) de déviation des produits.

10. Presse à balles cylindriques suivant l'une quelconque des revendications précédentes, caractérisée en ce que des moyens sont prévus pour commander le relevage du rouleau de renvoi déplaçable (16) prévu entre les chambres (22, 23) lors de la fermeture de la porte de la presse.

**Claims** (for the designated Contracting States : BE, FR, GB)

1. A baler for cylindrical or round bales of the type in which the harvested product, delivered in a mat-like formation to the main bale forming chamber (23) by means of at least one collector (26, 27, 28, 37) or equivalent device, is subjected to rolling in the said chamber by bands or belts (6, 12) which are positively driven, so as to form, by rolling the mat-like formation of the harvested product back on itself, a cylindrical or round bale, which is bound and then discharged when it has reached the desired diameter, the bands or belts (12) partly defining the main bale forming chamber (23), and also at least partially defining a primary chamber (22) for receiving harvested products, in which primary chamber the said products are rolled and compressed under the influence of the said bands or belts (12) so as to form a bale core, a support roll (16) for the bands or belts (12), movable between a lower position, in which the bands or belts (12) extend between the two chambers (22, 23), and an upper position in which a passage is formed between the said chambers, being provided for opening and/or closing the said passage for transfer of the bale core from the primary chamber (22) to the main chamber (23) after the discharge of a bale from the latter, the collector or collectors (26, 27, 28, 37), and if necessary a belt conveyor (24) being provided for directing the harvested products from the ground selectively towards the main chamber (23) or towards the primary chamber (22).

2. A baler for cylindrical bales according to Claim 1, characterised in that the bands or belts (12) for forming the bale are disposed along a path defined by support rolls (16, 31), in such a way that they simply define that part of the primary chamber (22) which is adjacent to the main chamber (23), and in that a set of additional bands or belts (32), passing over support rolls (33, 36) and defining the remainder of the primary chamber (22), are provided.

3. A baler according to Claim 1 or Claim 2, characterised in that it comprises two collectors (26, 27) or similar devices, one of which is mounted in such a way as to direct the harvested product, collected on the ground, towards the primary chamber (22), while the other is mounted in such a way as to direct the harvested product towards the main chamber (23), at least the collector (26), or leading collector, associated with the primary chamber (22), being movably mounted so that it can be raised during normal formation of a bale in the main chamber (23).

4. A baler for cylindrical bales according to any one of Claims 1 to 3, characterised in that it comprises a single collector (28) associated with a lower belt conveyor (29), these elements being movable between one position, in which the collector directs the harvested product towards the primary chamber (22), and another position in which the harvested product is directed by the collector on to the belt conveyor so as to transfer it to the main chamber (23).

5. A baler according to either one of Claims 1 and 2, characterised in that it comprises a single collector (37) disposed substantially intermediately between the primary chamber (22) and the main chamber (23), and normally directing the collected harvested product towards the main chamber, in combination with means (16) for diverting the harvested product towards the primary chamber during the binding of a bale in the main chamber and its discharge therefrom.

6. A baler for cylindrical bales according to Claim 5, characterised in that the diverting means comprise an arrangement for selective diversion by means of the intermediate support roll (16), which is accordingly movable into a lower position (16c) for diverting the products.

7. A baler for cylindrical bales according to any one of the preceding claims, characterised in that means are provided for controlling the raising of the movable support roll (16) provided between the chambers (22, 23) when the door of the baler is being closed.

**Claims** (for the designated Contracting States : IT, NL)

1. A baler for cylindrical or round bales of the type in which the harvested products, delivered in a mat-like formation to the main bale forming chamber (23) by means of at least one collector (26, 27, 28, 37) or equivalent device, is subjected to rolling in the said chamber by bands or belts (6, 12) which are positively driven, so as to form, by rolling the mat-like formation of the harvested products back on itself, a cylindrical or round bale, which is bound and then discharged when it has reached the desired diameter, the bands or belts (12) partly defining the main bale forming chamber (23) also at least partially defining a primary chamber (22) for receiving the harvested products, means (16) defining a transfer passage of the harvested products from the primary chamber to the main chamber after discharge of a bale from said chamber, characterised in that at least one collector (26, 27, 28, 37), is provided for directing the harvested products from the ground selectively towards the main chamber (23) or towards the primary chamber (22) and in that said primary chamber (22) is a chamber of formation of a bale core by rolling and by compression under the action of said bands or belts (12).

2. A baler for cylindrical bales according to Claim 1, characterised in that the bands or belts (12) for rolling the harvested products for forming the bale in the main chamber (23) are located, in a zone placed between the primary chamber (22) and the main chamber (23), around a support role (16) movable between a lower position in which these bands or belts (12) extend between the two chambers and an upper position in which a passage is formed between said chambers.

3. A baler for cylindrical bales according to Claim 1 or 2, characterised in that the bands or belts (12) are disposed along paths defined by support rolls (16, 17, 18, 19), in such a way that they limit totally or almost totally the primary chamber (22) of formation of a bale core.

4. A baler for cylindrical bales according to Claim 3, characterised in that the primary chamber (22) is completed by a short lower transport band (24, 29).

5. A baler for cylindrical bales according to Claim 1 or 2, characterised in that the bands or belts (12) for forming the bale are disposed along a path defined by support rolls (16, 31), in such a way that they simply define that part of the primary chamber (22) which is adjacent to the main chamber (23), and in that a set of additional bands or belts (32), passing over support rolls (33, 36) and defining the remainder of the primary chamber (22), are provided.

6. A baler according to any one of the previous claims, characterised in that it comprises two collectors (26, 27) or similar devices, one of which is mounted in such a way as to direct the harvested products, collected on the ground, towards the primary chamber (22), while the other is mounted in such a way as to direct the harvested products towards the main chamber (23), at least the collector (26), or leading collector, associated with the primary chamber (22), being movably mounted so that it can be raised during normal formation of a bale in the main chamber (23).

7. A baler for cylindrical bales according to any one of Claims 1 to 5, characterised in that it comprises a single collector (28) associated with a lower belt conveyor (29), these elements being movable between one position, in which the collector directs the harvested product towards the primary chamber (22), and another position in which the harvested product is directed by the collector on to the belt conveyor so as to transfer it to the main chamber (23).

8. A baler according to either one of Claims 1 to 5, characterised in that it comprises a single collector (37) disposed substantially intermediately between the primary chamber (22) and the main chamber (23), and normally directing the collected harvested products towards the main chamber, in combination with means (16) for diverting the harvested products towards the primary chamber during the binding of a bale in the main chamber and its discharge therefrom.

9. A baler for cylindrical bales according to Claim 8, characterised in that the diverting means comprise an arrangement for selective diversion by means of the intermediate support roll (16), which is accordingly movable into a lower position (16c) for diverting the products.

10. A baler for cylindrical bales according to any one of the preceding claims, characterised in that means are provided for controlling the raising of the movable support roll (16) provided between the chambers (22, 23) when the door of the baler is being closed.

**Patentansprüche** (für die benannte Vertragsstaaten : DE, FR, GB)

1. Presse für zylindrische oder runde Ballen des Typs, bei dem die Ernteprodukte in Form eines Vlieses der Hauptkammer (23) zur Bildung eines Ballens mittels eines Aufnehmers (26, 27, 28, 37) oder einer äquivalenten Einrichtung zugeführt und im Inneren dieser Kammer einem Aufrollvorgang unter der Wirkung von Bändern oder Riemen (6, 12) unterworfen werden, die im positiven Sinne angetrieben werden, um das Vlies aus Ernteprodukten auf sich selbst zu einem zylindrischen oder runden Ballen aufzurollen, der gebunden und dann ausgeworfen wird, sobald er den gewünschten Durchmesser erreicht hat, wobei die Bänder oder Riemen (12) teilweise die Hauptkammer (23) zur Bildung der Ballen und ebenso wenigstens teilweise eine erste Kammer (22) zur Aufnahme der Ernteprodukte begrenzen, in der die Produkte unter der Wirkung der genannten Bänder oder Riemen (12) aufgerollt und zusammengepreßt werden, um einen Ballenkern zu bilden ; bei der ferner eine Antriebsrolle (16) für die Bänder oder Riemen (12) vorgesehen ist, die zwischen einer unteren Stellung, in der sich die Bänder oder Riemen (12) zwischen den beiden Kammern (22, 23) erstrecken, und einer oberen Stellung beweglich ist, in der ein Durchgang zwischen den genannten Kammern gebildet ist, um den genannten Durchgang zu öffnen und/oder zu schließen und den Ballenkern von der ersten Kammer (22) in die Hauptkammer (23) zu überführen, nachdem ein Ballen aus der letzteren Kammer ausgeworfen worden ist ; wobei der oder die Aufnehmer (26, 27, 28, 37) und, ggf. ein Bandförderer (24), vorgesehen sind, um die Ernteprodukte vom Boden selektiv der Hauptkammer (23) oder der ersten Kammer (22) zuzuführen.

2. Presse für zylindrische Ballen nach Anspruch 1, dadurch gekennzeichnet, daß die Bänder oder Riemen (12) zur Bildung des Ballens entlang einer Spur angeordnet sind, die durch Antriebsrollen (16, 31) bestimmt ist, derart, daß sie einfach den Teil der ersten Kammer (22) begrenzen, der neben der Hauptkammer (23) liegt, und daß ein zusätzlicher Satz Bänder oder Riemen vorgesehen ist, die über Antriebsrollen (33 und 36) laufen und den übrigen Teil der ersten Kammer (22) begrenzen.

3. Ballenpresse nach Anspruch 1 oder Anspruch 2, dadurch gekennzeichnet, daß sie zwei Aufnehmer (26, 27) oder analoge Vorrichtungen aufweist, von denen eine so montiert ist, daß sie die vom Boden aufgenommenen Ernteprodukte in die erste Kammer (22) leitet, während die andere so montiert ist, daß sie die Ernteprodukte in die Hauptkammer (23) leitet, wobei wenigstens der Aufsammler (26), der der ersten Kammer (22) zugeordnet ist oder der vordere Aufsammler in verstellbarer Weise montiert ist, damit er während der normalen Bildung eines Ballens in der Hauptkammer (23) angehoben werden kann.

4. Presse für zylindrische Ballen nach irgendeinem der Ansprüche 1 bis 3, dadurch gekennzeichnet, daß sie einen einzigen Aufsammler (28) aufweist, dem ein unteres Transportband (29) zugeordnet ist, wobei diese Elemente zwischen einer Stellung, in der der Aufsammler die Ernteprodukte in die erste Kammer (22) leitet und einer anderen Stellung beweglich ist, in der die Ernteprodukte durch den Aufsammler über das Transportband (29) geleitet wird, damit sie in die Hauptkammer (23) überführt werden.

5. Ballenpresse nach irgendeinem der Ansprüche 1 und 2, dadurch gekennzeichnet, daß sie einen einzigen Aufsammler (37) aufweist, der ziemlich genau zwischen der ersten Kammer (22) und der Hauptkammer (23) angeordnet ist und normalerweise die aufgesammelten Ernteprodukte zur Hauptkammer leitet, in Kombination mit Mitteln (16) welche die Ernteprodukte zur ersten Kammer während der Bindung eines Ballens in der Hauptkammer und des Auswerfens des Ballens aus dieser Kammer ablenkt.

6. Presse für zylindrische Ballen nach Anspruch 5, dadurch gekennzeichnet, daß die Ablenkmittel durch eine Ablenkvorrichtung oder ebensogut direkt durch die Zwischenantriebsrolle (16) gebildet werden, welche dann bis in eine untere Stellung (16c) zur Ablenkung der Produkte verstellbar ist.

7. Presse für zylindrische Ballen nach irgendeinem der voranstehenden Ansprüche, dadurch gekennzeichnet, daß Mittel vorgesehen sind, um das Anheben der verstellbaren Antriebsrolle (16), die zwischen den Kammern (22, 23) vorgesehen ist, zu steuern, wenn das Tor der Presse geschlossen wird.

**Patentansprüche** (für die benannte Vertragsstaaten : IT, NL)

1. Presse für zylindrische oder runde Ballen des Typs, bei dem die Ernteprodukte in Form eines Vlieses der Hauptkammer (23) zur Bildung eines Ballens mittels eines Aufnehmers (26, 27, 28, 37) oder einer äquivalenten Einrichtung zugeführt und im Inneren dieser Kammer einem Aufrollvorgang unter der Wirkung von Bändern oder Riemen (6, 12) unterworfen werden, die im positiven Sinne angetrieben werden, um das Vlies aus Ernteprodukten auf sich selbst zu einem zylindrischen oder runden Ballen aufzurollen, der gebunden und dann ausgeworfen wird, sobald er den gewünschten Durchmesser erreicht hat, wobei die Bänder oder Riemen (12) teilweise die Hauptkammer (23) zur Bildung des Ballens und ebenso wenigstens teilweise eine erste Kammer (22) zur Aufnahme der Ernteprodukte begrenzen, wobei Mittel (16) vorgesehen sind, um einen Transferdurchgang für die Ernteprodukte in die erste Kammer zu bilden, nachdem ein Ballen aus dieser abgegeben worden ist, dadurch gekennzeichnet, daß wenigstens ein Aufnehmer (26, 27, 28, 37) vorgesehen ist, um selektiv die Ernteprodukte vom Boden aus in die Hauptkammer (23) oder in diese erste Kammer (22) zu leiten, und daß die genannte erste Kammer (22) eine Kammer zur Bildung des Kernes eines Ballens durch Aufrollen und Zusammenpressen unter der Wirkung der genannten Bänder oder Riemen (12) ist.

2. Presse für zylindrische Ballen nach Anspruch, dadurch gekennzeichnet, daß die Bänder oder Riemen (12) zum Aufrollen der Ernteprodukte für die Bildung des Ballens in der Hauptkammer (23) in einer Zone, die zwischen der ersten Kammer (22) und der Hauptkammer (23) liegt, um eine Antriebsrolle (16) laufen, die zwischen einer unteren Stellung, in der sich diese Bänder oder Riemen (12) zwischen den beiden Kammern erstrecken, und einer oberen Stellung beweglich ist, in der ein Durchgang zwischen den genannten Kammern gebildet wird.

3. Presse für zylindrische Ballen nach Anspruch 1 oder 2, dadurch gekennzeichnet, daß die Bänder oder Riemen (12) entlang von Bahnen angeordnet sind, welche durch die Antriebsrollen (16, 18 und 19) bestimmt sind, und zwar so, daß sie im Ganzen oder nahezu im Ganzen die erste Kammer (22) zur Bildung des Kernes des Ballens begrenzen.

4. Presse für zylindrische Ballen nach Anspruch 3, dadurch gekennzeichnet, daß die erste Kammer (22) durch ein unteres kurzes Transportband (24, 29) vervollständigt ist.

5. Presse für zylindrische Ballen nach Anspruch 1 oder 2, dadurch gekennzeichnet, daß die Bänder oder Riemen (12) zur Bildung des Ballens entlang einer Bahn angeordnet sind, welche durch die Antriebsrollen (16, 31) bestimmt sind, und zwar so, daß sie einfach den Teil der ersten Kammer (22) begrenzen, der an die Hauptkammer (23) angrenzt, und daß ein Satz von zusätzlichen Bändern oder Riemen (32) vorgesehen ist, welche über die Antriebsrollen (33, 36) laufen und den übrigen Teil der ersten Kammer (22) begrenzen.

6. Presse für zylindrische Ballen nach irgendeinem der voranstehenden Ansprüche, dadurch gekennzeichnet, daß sie zwei Aufnehmer (26, 27) oder analoge Vorrichtungen umfaßt, von denen einer in der Weise montiert ist, daß er die vom Boden aufgesammelten Ernteprodukte zu der ersten Kammer (22) leitet, während der andere in der Weise montiert ist, daß er die Ernteprodukte der Hauptkammer (23) zuleitet, wobei wenigstens der Aufnehmer (26), der der ersten Kammer (22) zugeordnet ist, oder der vordere Aufsammler in verstellbarer Weise montiert ist, mit der Folge, daß er während der normalen Bildung eines Ballens in der Hauptkammer (23) angehoben werden kann.

7. Presse für zylindrische Ballen nach irgendeinem der Ansprüche 1 bis 5, dadurch gekennzeichnet, daß sie einen einzigen Aufnehmer (28) aufweist, dem ein unteres Transportband (29) zugeordnet ist, wobei diese Elemente zwischen einer Stellung, in der der Aufsammler die Ernteprodukte in die erste Kammer (22) leitet, und einer anderen Stellung beweglich ist, in der die Ernteprodukte durch den Aufnehmer auf das Transportband (29) geleitet werden, damit sie in die Hauptkammer (23) transportiert werden.

8. Presse für zylindrische Ballen nach irgendeinem der Ansprüche 1 bis 5, dadurch gekennzeichnet, daß sie einen einzigen Aufnehmer (27) umfaßt, der im wesentlichen zwischen der ersten Kammer (22) und der Hauptkammer (23) angeordnet ist und die aufgesammelten Ernteprodukte normalerweise in die Hauptkammer leitet, in Kombination mit Mitteln (16), welche die Ernteprodukte zur ersten Kammer ableiten, und zwar während der Bindung eines Ballens in der Hauptkammer und während seines Auswerfens aus dieser.

9. Presse für zylindrische Ballen nach Anspruch 8, dadurch gekennzeichnet, daß die Ableitmittel durch eine Ablenkvorrichtung oder direkt durch die Zwischenantriebsrolle (16) gebildet werden, der oder die bis in eine untere zur Ablenkung der Produkte dienende Stellung (16c) verstellbar ist.

10. Presse für zylindrische Ballen nach irgendeinem der voranstehenden Ansprüche, dadurch gekennzeichnet, daß Mittel vorgesehen sind, um das Anheben der verstellbaren Antriebsrolle (16), die zwischen den Kammern (22, 23) vorgesehen ist, zu steuern, wenn das Tor der Presse geschlossen wird.

FIG. 1

0 149 368

FIG. 2

**FIG. 3**